# EUROPEAN PATENT APPLICATION

(11) **EP 2 723 015 A1**
(43) Date of publication of application: **23.04.2014**
(21) Application number: 12800296.1
(22) Date of filing: 18.06.2012
(51) Int. Cl.: H04L 12/00

(54) **METHOD AND DEVICE FOR COMMUNICATING GRANULARITY OF PARAMETERS**

(30) Priority: 17.06.2011 CN 201110163719
(71) Applicant: ZTE Corporation, Shenzhen, Guangdong 518057 (CN)
(72) Inventor: CHEN, Wu, Shenzhen Guangdong 518057 (CN); ZHANG, Weiliang, Shenzhen Guangdong 518057 (CN); ZHANG, Dezhi, Shenzhen Guangdong 518057 (CN)
(74) Representative: Ahner, Philippe
(86) International application number: PCT/CN2012/077110
(87) International publication number: WO 2012/171508

(57) **Abstract**

A method and a device for transmitting parameter granularity are disclosed. The method includes: an Optical Line Terminal (OLT) transmits parameter granularity to an Optical Network Unit (ONU) through a Ranging GRANT message, or an OLT transmits parameter granularity to an ONU through a profile Physical Layer Operation, Administration and Maintenance (PLOAM) message, or parameter granularity is set to an ONU through a SET operation of an Optical Network Terminal Management Control Interface (OMCI); and the ONU determines a location of an uplink bandwidth allocated from the OLT to the ONU in an uplink frame according to the parameter granularity and a parameter to which the parameter granularity corresponds in an allocation structure. With the disclosure, the granularity of an adopted parameter can be notified to different ONUs when the OLT allocates an uplink bandwidth to the different ONUs.

## Description

### TECHNICAL FIELD

The disclosure relates to the field of communication technology, and in particular to a method and a device for transmitting parameter granularity.

### BACKGROUND

Gigabit-Capable Passive Optical Network (GPON) technology is an important technical branch in a Passive Optical Network (PON) family. Similar to other PON technologies, the GPON is also passive optical access technology using a point-to-multipoint topology structure.

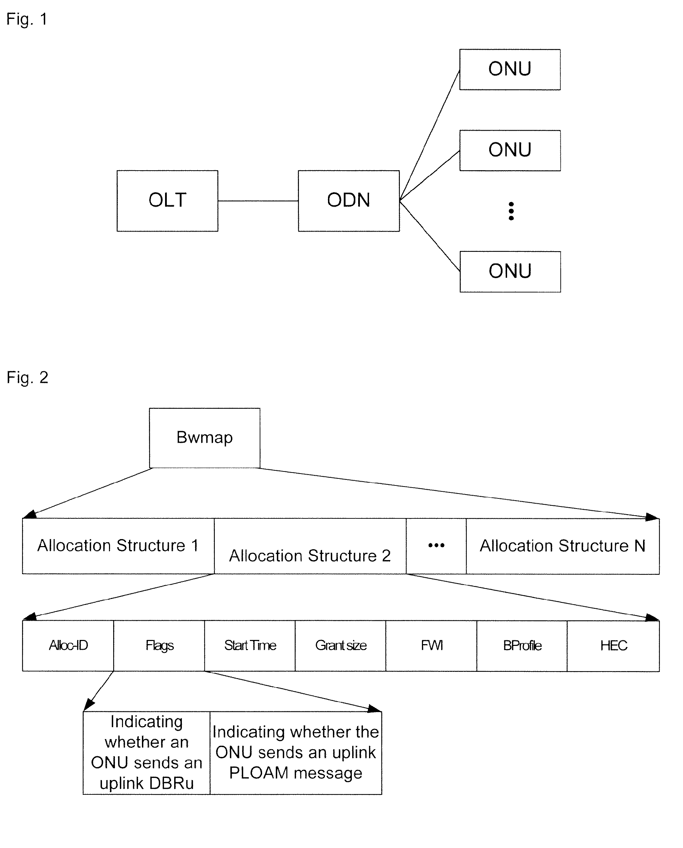

The topology structure of a GPON system is as shown in Fig. 1. The GPON consists of an Optical Line Terminal (OLT) at a bureau side, an Optical Network Unit (ONU) at a user side, and an Optical Distribution Network (ODN), and usually adopts a point-to-multipoint network structure. The ODN includes a single mode fibre, an optical splitter, an optical connector or other passive optical devices, and provides an optical transmission medium for physical connection between the OLT and the ONU.

With the development of Internet technology and the increasing demands on great bandwidth, next generation PON technology based on the GPON technology develops rapidly, in which XG-PON technology is widely regarded as the next generation PON technology which will be possibly adopted. The downlink rate and the uplink rate of the XG-PON technology are 10Gbit/s and 2.5Gbit/s respectively, which can meet the requirements of residential users on bandwidth. Data are transmitted in a broadcast mode in a downlink direction (OLT to ONU) of an XG-PON system. Specifically, each ONU receives all frames and then acquires its own frame according to an ONU Identifier (ID) (ONU-ID), a GEM-Port ID and a bandwidth allocation identifier. To transmit data in an uplink direction (ONU to OLT), since each ONU needs to share a transmission medium, each ONU transmits uplink data in a time-division multiplexing way under the control of the OLT on an uplink bandwidth which is allocated by the OLT through Bandwidth mapping (BWmap) field.

The structure of the BWmap is as shown in Fig. 2. The BWmap consists of N allocation structures each including a bandwidth allocation ID (Alloc-ID) field, a bandwidth allocation flags (Flags) field, a start time (Start Time) field, a grant size (Grant Size) field, a Forced Wakeup Indication (FWI) field, a burst overhead parameter (Bprofile) field and a Hybrid Error Correction (HEC) field.

The Alloc-ID, i.e., the bandwidth allocation identifier, is usually the identifier of a Transmission Container (T-CONT).

The flags, i.e., options for bandwidth allocation, occupy 2 bits, in which one bit is used for indicating whether the ONU sends an uplink Dynamic Bandwidth Report (DBRu) and the other bit is used for indicating whether the ONU sends a Physical Layer Operation, Administration and Maintenance (PLOAM) message.

The start time represents the location of the first byte of XG-PON Transmission Convergence burst (XGTC burst) sent by the ONU in an uplink frame of 125us.

When the ONU receives an allocation structure, the ONU performs the HEC on data in the received allocation structure if determining, according to the bandwidth allocation identifier, that the allocation structure is allocated to the ONU. If the correction result is correct, the ONU will start to send data in the T-CONT corresponding to the bandwidth allocation identifier at a moment which is indicated by the start time in the allocation structure. The length of the sent data is a length of the data which can be sent by the ONU and which is parsed by the ONU according to the grant size in the allocation structure.

In the related art, the PON system can only access an ONU of one uplink rate (for example, 2.5Gbit/s). However, in order to meet the diverse requirements, for example, commercial users need a greater uplink bandwidth and demand for an uplink rate of 5Gbit/s, the PON system is required to access ONUs of two or more uplink rates simultaneously. In this case, how to allocate the uplink bandwidth by the OLT to improve the utilization rate of the uplink bandwidth is a problem to be solved.

In order to solve the technical problem above, a method for allocating an uplink bandwidth in a PON is provided in the related art, and an OLT in the PON system can connect to ONUs of different uplink rates. The method includes: parameters adopted by an OLT when the OLT allocates the uplink bandwidth to ONUs of different uplink rates include a start time and a grant size; the start times of the ONUs of different uplink rates have the same granularity, and the granularities of the grant sizes of the ONUs of different uplink rates are directly proportional to the different uplink rates respectively; and the OLT allocates an bandwidth to each ONU successively, which includes that the start time of a next ONU is acquired according to the start time, the grant size and the uplink rate of the current ONU.

In such case, how to notify ONUs of granularities of parameters (i.e., granularities of the grant size and the start time) adopted by an OLT when the OLT allocates an uplink bandwidth is a problem to be solved.

### SUMMARY

In view of this, embodiments of the disclosure are intended to provide a method and a device for transmitting parameter granularity, in order to solve the problem of how to notify different ONUs of the granularity of a parameter adopted by an OLT when the OLT allocates an uplink bandwidth to the different ONUs.

To this end, the technical solutions of the embodiments of the disclosure are implemented as follows.

An embodiment of the disclosure provides a method for transmitting parameter granularity, which includes:
an OLT transmits the parameter granularity to an ONU through a Ranging GRANT message, or an OLT transmits the parameter granularity to an ONU through a Profile PLOAM message, or an OLT sets the parameter granularity for an ONU through a SET operation of an Optical Network Terminal Management Control Interface (OMCI); and
the ONU determines a location of an uplink bandwidth allocated from the OLT to the ONU in an uplink frame according to the parameter granularity and a parameter to which the parameter granularity corresponds in an allocation structure.

The parameter granularity may include granularity of a start time and granularity of a grant size, and the parameter to which the parameter granularity corresponds in the allocation structure may include the start time and the grant size.

The method may further include: a default value of the parameter granularity is preset.

The process that the default value of the parameter granularity is preset may include:
when the OLT is connected to a plurality of ONUs of different uplink rates, one of the different uplink rates is selected as a reference uplink rate, and the granularity of the start time and the granularity of the grant size corresponding to the reference uplink rate are set, wherein the start times of the ONUs of different uplink rates have the same granularity, and the granularities of the grant sizes of the ONUs of different uplink rates are directly proportional to the different uplink rates respectively.

The process that the default value of the parameter granularity is preset may include:
when the OLT is connected to a plurality of ONUs of different uplink rates, the granularity of the start time and the granularity of the grant size corresponding to each of the different uplink rates are set.

The process that the OLT transmits the parameter granularity to the ONU through the Ranging GRANT message may include:
the OLT sets a corresponding relationship between a value of a grant size field in the Ranging GRANT message and the uplink rate of the ONU;
during a windowing registration process of a registration activation process of the ONU, the OLT sends the Ranging GRANT message to the ONU when the OLT measures a distance between the OLT and the ONU; and
the ONU determines the granularity of the start time and the granularity of the grant size according to the value of the grant size field in the Ranging GRANT message and the preset default value of the parameter granularity.

The process that the OLT transmits the parameter granularity to the ONU through the Profile PLOAM message may include:
the OLT sets a corresponding relationship between a value of a first byte of a Padding field in the Profile PLOAM message and the uplink rate of the ONU;
the OLT sends the Profile PLOAM message to the ONU periodically; and
the ONU determines the granularity of the start time and the granularity of the grant size according to the value of the first byte of the Padding field in the Profile PLOAM message and the preset default value of the parameter granularity.

The process that the parameter granularity is set to the ONU through the SET operation of the OMCI may include:
after the ONU is registered in the OLT and the OLT sends a ranging result to the ONU, the OLT sets a corresponding relationship between a value of a rate factor field and the uplink rate of the ONU in an ONU2-G of an OMCI Management Entity (ME); and
the ONU determines the granularity of the start time and the granularity of the grant size according to the value of the rate factor field and the preset default value of the parameter granularity.

An embodiment of the disclosure further provides a device for transmitting parameter granularity, which includes: a transmitting module and a processing module, wherein
the transmitting module is configured to: transmit the parameter granularity to an ONU through a Ranging GRANT message, or transmit the parameter granularity to an ONU through a Profile PLOAM message, or set the parameter granularity for an ONU through a SET operation of an OMCI; and
the processing module is configured to determine a location of an uplink bandwidth allocated from the OLT to the ONU in an uplink frame according to the parameter granularity and a parameter to which the parameter granularity corresponds in an allocation structure.

The parameter granularity may include granularity of a start time and granularity of a grant size, and the parameter to which the parameter granularity corresponds in the allocation structure may include the start time and the grant size.

The device may further include a setting module configured to preset a default value of the parameter granularity.

The setting module may be further configured to, when the OLT is connected to a plurality of ONUs of different uplink rates, select one of the different uplink rates as a reference uplink rate, and set the granularity of the start time and the granularity of the grant size corresponding to the reference uplink rate, wherein the start time of the ONUs of different uplink rates have the same granularity, and the granularities of the grant sizes of the ONUs of different uplink rates are directly proportional to the different uplink rates respectively.

The setting module may be further configured to, when the OLT is connected to a plurality of ONUs of different uplink rates, set the granularity of the start time and the granularity of the grant size corresponding to each of the different uplink rates.

The transmitting module may be further configured to: set a corresponding relationship between a value of a grant size field in the Ranging GRANT message and the uplink rate of the ONU; and during a windowing registration process of a registration activation process of the ONU, send the Ranging GRANT message to the ONU when the OLT measures a distance between the OLT and the ONU; and
the processing module may be further configured to determine the granularity of the start time and the granularity of the grant size according to the value of the grant size field in the Ranging GRANT message and the preset default value of the parameter granularity.

The transmitting module may be further configured to set a corresponding relationship between a value of a first byte of a Padding field in the Profile PLOAM message and the uplink rate of the ONU and periodically send the Profile PLOAM message to the ONU; and
the processing module may be further configured to determine the granularity of the start time and the granularity of the grant size according to the value of the first byte of the Padding field in the Profile PLOAM message and the preset default value of the parameter granularity.

The transmitting module may be further configured to set a corresponding relationship between a value of a rate factor field and the uplink rate of the ONU in an ONU2-G of an OMCI ME after the ONU is registered in the OLT and the OLT sends a ranging result to the ONU; and
the processing module may be further configured to determine the granularity of the start time and the granularity of the grant size according to the value of the rate factor field and the preset default value of the parameter granularity.

By means of the solutions for transmitting parameter granularity in the embodiments of the disclosure, the OLT transmits the parameter granularity to the ONU through the Ranging GRANT message, or the OLT transmits the parameter granularity to the ONU through the Profile PLOAM message, or the OLT sets the parameter granularity for the ONU through the SET operation of the OMCI, so that the granularity of the adopted parameter can be notified to different ONUs when the OLT allocates an uplink bandwidth to the different ONUs, and the ONU can also determine the location of the uplink bandwidth allocated from the OLT to the ONU in an uplink frame according to the parameter granularity and the parameter in the allocation structure.

### BRIEF DESCRIPTION OF THE DRAWINGS

Fig. 1 is a diagram showing a topology structure of a GPON system;
Fig. 2 is a diagram showing a structure of a GPON downlink frame;
Fig. 3 is a diagram showing a flowchart of a method for transmitting parameter granularity according to an embodiment of the disclosure; and
Fig. 4 is diagram showing a structure of a device for transmitting parameter granularity according to an embodiment of the disclosure.

### DETAILED DESCRIPTION

The technical solutions of embodiments of the disclosure are further elaborated below with reference to the drawings and specific embodiments.

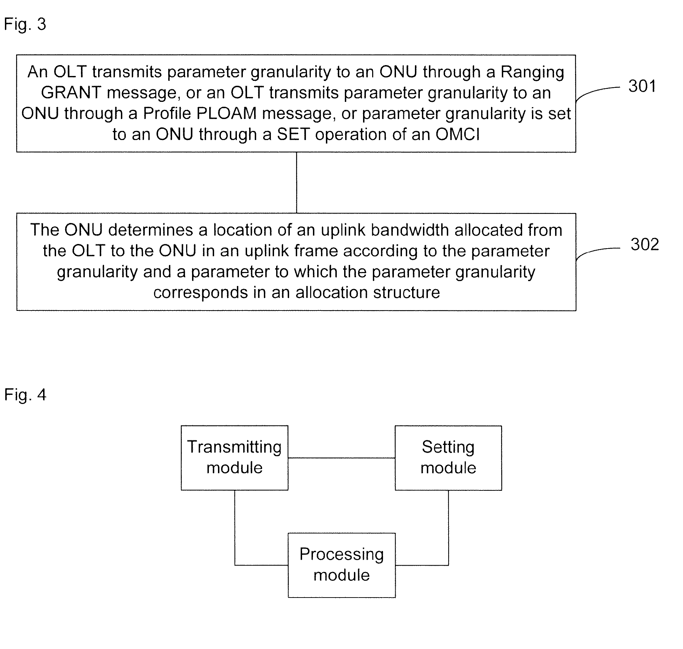

As shown in Fig. 3, a method for transmitting parameter granularity according to an embodiment of the disclosure includes:
Step 301: An OLT transmits the parameter granularity to an ONU through a Ranging GRANT message, or an OLT transmits the parameter granularity to an ONU through a Profile PLOAM message, or an OLT sets the parameter granularity for an ONU through the SET operation of an OMCI.

The parameter mainly includes a start time and a grant size.

Step 302: The ONU determines a location of an uplink bandwidth allocated from the OLT to the ONU in an uplink frame according to the parameter granularity and a parameter to which the parameter granularity corresponds in an allocation structure.

The implementation that the ONU determines the location of the uplink bandwidth allocated from the OLT to the ONU in the uplink frame according to the granularity of the start time and the granularity of the grant size and the start time and the grant size in the allocation structure is the related art, which is not repeated here.

When the OLT allocates an uplink bandwidth to each ONU through BWmap, the start time represents the location of the first byte of XGTC burst sent by the ONU in the uplink frame of 125us, and the grant size represents the length of data sent by the ONU. For the same grant size, the time required for sending data corresponding to the grant size by an ONU of the uplink rate of 5Gbit/s is half that required for sending data corresponding to the grant size by an ONU of the uplink rate of 2.5Gbit/s. Therefore, when the OLT allocates an uplink bandwidth to ONUs of two or more uplink rates, in order to improve the uplink transmission efficiency, the OLT needs to know the uplink rate of each ONU and can calculate the time required for sending uplink data by an ONU in an uplink frame according to the uplink rate of the ONU and the start time and grant size in the allocation structure after determining the uplink rate of the ONU. Accordingly, the OLT can calculate the time when the next ONU starts to send uplink data, i.e., the value of the start time.

Therefore, on the premise of improving the uplink transmission efficiency, the OLT needs to allocate a bandwidth to each ONU after acquiring the uplink rate of each ONU when the OLT connects to ONUs of two or more uplink rates.

The parameter adopted when the OLT allocates uplink bandwidth to ONUs of different rates includes the start time and the grant size, and the granularities of the same parameters of the ONUs of different uplink rates are same or different.

Before the parameter granularity is passed, it is necessary to preset a default value of the parameter granularity, which can be modified as required. Specifically, there are two modes as follows.

Mode 1: When the OLT is connected to a plurality of ONUs of different uplink rates, a system can select one of the different uplink rates as a reference uplink rate and set the granularities of the start time and the grant size corresponding to the reference uplink rate. The start times of the ONUs of different uplink rates have the same granularity, and the granularities of the grant sizes of the ONUs of different uplink rates is directly proportional to the different uplink rates of the ONUs respectively. The granularity of the start time of an ONU is the same as or different from that of the grant size of the ONU.

For example, when the OLT accesses ONUs of uplink rates of 2.5Gbit/s, 5Gbit/s and 10Gbit/s, the system sets 5Gbit/s as the reference uplink rate and sets the granularities of the start time and the Grant size of the ONU of the uplink rate of 5Gbit/s to 4. Then, the granularity of the start time and the granularity of the grant size of the ONU of the uplink rate of 2.5Gbit/s can be determined to be 4 and 2 respectively, and the granularity of the start time and the granularity of the grant size of the ONU of the uplink rate of 10Gbit/s can be determined to be 4 and 8 respectively.

If the granularity of the start time and the granularity of the grant size of the ONU of the uplink rate of 5Gbit/s are 4 and 2 respectively, the granularity of the start time and the granularity of the grant size of the ONU of the uplink rate of 2.5Gbit/s can be determined to be 4 and 1 respectively, and the granularity of the start time and the granularity of the grant size of the ONU of the uplink rate of 10Gbit/s can be determined to be both 4.

Mode 2: When the OLT connects to a plurality of ONUs of different uplink rates, a system can set the granularity of the start time and the granularity of the grant size corresponding to each of the different uplink rates successively.

Manners for transmitting parameter granularity in the embodiments of the disclosure may include:
Manner 1: An OLT transmits the parameter granularity to an ONU through a Ranging GRANT message.

The OLT sets the corresponding relationship between the value of a grant size field in the Ranging GRANT message and the uplink rate of the ONU; and during a windowing registration process of a registration activation process of the ONU, the OLT sends the Ranging GRANT message to the ONU when the OLT measures a distance between the OLT and the ONU. At the moment, the bandwidth allocation identifier (Alloc-ID) is the ONU-ID of the ranged ONU. Generally, the grant size field represents no rate when the grant size field is set to 0, and the grant size field can represent the parameter granularities corresponding to the uplink rates of 2.5Gbit/s, 5Gbit/s and 10Gbit/s respectively when the grant size field is set to 1, 2 and 3. The rest can be done in the same manner.

The ONU determines the granularity of the start time and the granularity of the grant size according to the value of the grant size field in the Ranging GRANT message and the preset default value of the parameter granularity.

For example, if it is assumed that the parameter granularity is set by Mode 1, the ONU reads the grant size field in the Ranging GRANT message when the Ranging GRANT message is received by the ONU. If the value of the grant size field is 1, the ONU can determine that the parameter granularity of the ONU is the parameter granularity corresponding to the uplink rate of 2.5Gbit/s. If the granularity of the start time and the granularity of the grant size corresponding to the reference uplink rate of 5Gbit/s preset by the system are both 4, the ONU can determine that the granularities of the start time and the grant size of the ONU are 4 and 2 respectively.

If it is assumed that the parameter granularity is set by Mode 2, the ONU reads the grant size field in the Ranging GRANT message when the message Ranging GRANT message is received by the ONU. If the value of the grant size field is 2, the ONU can determine that the parameter granularity of the ONU is the parameter granularity corresponding to the uplink rate of 5Gbit/s according to the parameter granularity preset by the system.

Manner 2: The OLT transmits the parameter granularity to the ONU through a Profile PLOAM message.

The OLT sets the corresponding relationship between the value of the first byte of a Padding field in the Profile PLOAM message and the uplink rate of the ONU, and sends the Profile PLOAM message to the ONU periodically. For example, the first byte of the Padding field represents the parameter granularities corresponding to the uplink rates of 2.5Gbit/s, 5Gbit/s and 10Gbit/s respectively when the first byte of the Padding field is set to 1, 2 and 3. The rest can be done in the same manner.

The ONU determines the granularity of the start time and the granularity of the grant size according to the value of the first byte of the Padding field in the Profile PLOAM message and the preset default value of parameter granularity.

Manner 3: The parameter granularity is set to the ONU through the SET operation of the OMCI.

After the ONU is registered in the OLT and the OLT sends a ranging result to the ONU, the OLT sets the corresponding relationship between the value of a rate factor field and the uplink rate of the ONU in an ONU2-G of an OMCI ME. Specifically, the rate factor field is set in the ONU2-G of the OMCI ME, and the rate factor field represents the parameter granularities corresponding to the uplink rates of 2.5Gbit/s, 5Gbit/s and 10Gbit/s respectively when the rate factor field is set to 1, 2 and 3. The rest can be done in the same manner.

The ONU can acquire its own parameter granularities according to the value of the rate factor field in the ONU2-G of its own OMCI ME and the parameter granularity preset by the system, including the granularity of the start time and the granularity of the grant size.

The corresponding relationship between the value of each field and the uplink rate of the ONU can be set as required.

In order to implement the method for transmitting the parameter granularity, an embodiment of the disclosure further provides a device for transmitting the parameter granularity. As shown in Fig. 4, the device includes: a transmitting module and a processing module.

The transmitting module is configured to: transmit the parameter granularity to an ONU through a Ranging GRANT message, or transmit the parameter granularity to an ONU through a Profile PLOAM message, or set the parameter granularity for an ONU through a SET operation of an OMCI.

The processing module is configured to determine a location of an uplink bandwidth allocated from an OLT to the ONU in an uplink frame according to the parameter granularity and a parameter to which the parameter granularity corresponds in an allocation structure.

The parameter granularity includes the granularity of the start time and the granularity of the grant size, and the parameter to which the parameter granularity corresponds in the allocation structure includes the start time and the grant size.

The device further includes a setting module configured to preset a default value of the parameter granularity.

The setting module is further configured to, when the OLT is connected to a plurality of ONUs of different uplink rates, select one of the different uplink rates as a reference uplink rate, and set the granularity of the start time and the granularity of the grant size corresponding to the reference uplink rate, wherein the start times of the ONUs of different uplink rates have the same granularity and the granularities of the grant sizes of the ONUs of different uplink rates are directly proportional to the different uplink rates respectively.

The setting module is further configured to, when the OLT is connected to a plurality of ONUs of different uplink rates, set the granularity of the start time and the granularity of the grant size corresponding to each of the different uplink rates.

The transmitting module is further configured to: set a corresponding relationship between a value of a grant size field in the Ranging GRANT message and the uplink rate of the ONU; and during a windowing registration process of a registration activation process of the ONU, send the Ranging GRANT message to the ONU when the OLT measures a distance between the OLT and the ONU; and
correspondingly, the processing module is further configured to determine the granularity of the start time and the granularity of the grant size according to the value of the grant size field in the Ranging GRANT message and the preset default value of the parameter granularity.

The transmitting module is further configured to set a corresponding relationship between a value of a first byte of a Padding field in the Profile PLOAM message and the uplink rate of the ONU and periodically send the Profile PLOAM message to the ONU; and
correspondingly, the processing module is further configured to determine the granularity of the start time and the granularity of the grant size according to the value of the first byte of the Padding field in the Profile PLOAM message and the preset default value of the parameter granularity.

The transmitting module is further configured to set a corresponding relationship between a value of a rate factor field and the uplink rate of the ONU in an ONU2-G of an OMCI ME after the ONU is registered in the OLT and the OLT sends a ranging result to the ONU; and
correspondingly, the processing module is further configured to determine the granularity of the start time and the granularity of the grant size according to the value of the rate factor field and the preset default value of parameter granularity.

The above are only the preferred embodiments of the disclosure, and are not intended to limit the scope of protection of the claims of the disclosure.

## Claims

1. A method for transmitting parameter granularity, comprising:
transmitting, by an Optical Line Terminal (OLT), the parameter granularity to an Optical Network Unit (ONU) through a Ranging GRANT message; or, transmitting, by an OLT, the parameter granularity to an ONU through a Profile Physical Layer Operation, Administration and Maintenance (PLOAM) message; or, setting, by an OLT, the parameter granularity for an ONU through a SET operation of an Optical Network Terminal Management Control Interface (OMCI); and
determining, by the ONU, a location of an uplink bandwidth allocated from the OLT to the ONU in an uplink frame according to the parameter granularity and a parameter to which the parameter granularity corresponds in an allocation structure.

2. The method according to claim 1, wherein the parameter granularity comprises granularity of a start time and granularity of a grant size, and the parameter to which the parameter granularity corresponds in the allocation structure comprises the start time and the grant size.

3. The method according to claim 2, further comprising: presetting a default value of the parameter granularity.

4. The method according to claim 3, wherein the step of presetting the default value of the parameter granularity comprises:
when the OLT is connected to a plurality of ONUs of different uplink rates, selecting one of the different uplink rates as a reference uplink rate and setting the granularity of the start time and the granularity of the grant size corresponding to the reference uplink rate, wherein the start times of the ONUs of different uplink rates have a same granularity and the granularities of the grant sizes of the ONUs of different uplink rates are directly proportional to the different uplink rates respectively.

5. The method according to claim 3, wherein the step of presetting the default value of the parameter granularity comprises:
when the OLT is connected to a plurality of ONUs of different uplink rates, setting the granularity of the start time and the granularity of the grant size corresponding to each of the different uplink rates.

6. The method according to claim 4 or 5, wherein the step of transmitting, by the OLT, the parameter granularity to the ONU through the Ranging GRANT message comprises:
setting, by the OLT, a corresponding relationship between a value of a grant size field in the Ranging GRANT message and the uplink rate of the ONU;
during a windowing registration process of a registration activation process of the ONU, sending, by the OLT, the Ranging GRANT message to the ONU when the OLT measures a distance between the OLT and the ONU; and
determining, by the ONU, the granularity of the start time and the granularity of the grant size according to the value of the grant size field in the Ranging GRANT message and the preset default value of the parameter granularity.

7. The method according to claim 4 or 5, wherein the step of transmitting, by the OLT, the parameter granularity to the ONU through the Profile PLOAM message comprises:
setting, by the OLT, a corresponding relationship between a value of a first byte of a Padding field in the Profile PLOAM message and the uplink rate of the ONU;
sending, by the OLT, the Profile PLOAM message to the ONU periodically; and
determining, by the ONU, the granularity of the start time and the granularity of the grant size according to the value of the first byte of the Padding field in the Profile PLOAM message and the preset default value of the parameter granularity.

8. The method according to claim 4 or 5, wherein the step of setting the parameter granularity for the ONU through the SET operation of the OMCI comprises:
setting, by the OLT, a corresponding relationship between a value of a rate factor field and the uplink rate of the ONU in an ONU2-G of an OMCI Management Entity (ME) after the ONU is registered in the OLT and the OLT sends a ranging result to the ONU; and
determining, by the ONU, the granularity of the start time and the granularity of the grant size according to the value of the rate factor field and the preset default value of the parameter granularity.

9. A device for transmitting parameter granularity, comprising: a transmitting module and a processing module, wherein
the transmitting module is configured to: transmit the parameter granularity to an Optical Network Unit (ONU) through a Ranging GRANT message, or transmit the parameter granularity to an ONU through a Profile Physical Layer Operation, Administration and Maintenance (PLOAM) message, or set the parameter granularity for an ONU through a SET operation of an Optical Network Terminal Management Control Interface (OMCI); and
the processing module is configured to determine a location of an uplink bandwidth allocated from the OLT to the ONU in an uplink frame according to the parameter granularity and a parameter to which the parameter granularity corresponds in an allocation structure.

10. The device according to claim 9, wherein the parameter granularity comprises granularity of a start time and granularity of a grant size, and the parameter to which the parameter granularity corresponds in the allocation structure comprises the start time and the grant size.

11. The device according to claim 10, further comprising a setting module configured to preset a default value of the parameter granularity.

12. The device according to claim 11, wherein
the setting module is further configured to, when the OLT is connected to a plurality of ONUs of different uplink rates, select one of the different uplink rates as a reference uplink rate, and set the granularity of the start time and the granularity of the grant size corresponding to the reference uplink rate, wherein the start times of the ONUs of different uplink rates have a same granularity and the granularities of the grant sizes of the ONUs of different uplink rates are directly proportional to the different uplink rates respectively.

13. The device according to claim 11, wherein
the setting module is further configured to, when the OLT is connected to a plurality of ONUs of different uplink rates, set the granularity of the start time and the granularity of the grant size corresponding to each of the different uplink rates.

14. The device according to claim 12 or 13, wherein
the transmitting module is further configured to: set a corresponding relationship between a value of a grant size field in the Ranging GRANT message and the uplink rate of the ONU; and during a windowing registration process of a registration activation process of the ONU, send the Ranging GRANT message to the ONU when the OLT measures a distance between the OLT and the ONU; and
the processing module is further configured to determine the granularity of the start time and the granularity of the grant size according to the value of the grant size field in the Ranging GRANT message and the preset default value of the parameter granularity.

15. The device according to claim 12 or 13, wherein
the transmitting module is further configured to set a corresponding relationship between a value of a first byte of a Padding field in the Profile PLOAM message and the uplink rate of the ONU and periodically send the Profile PLOAM message to the ONU; and
the processing module is further configured to determine the granularity of the start time and the granularity of the grant size according to the value of the first byte of the Padding field in the Profile PLOAM message and the preset default value of the parameter granularity.

16. The device according to claim 12 or 13, wherein
the transmitting module is further configured to set a corresponding relationship between a value of a rate factor field and the uplink rate of the ONU in an ONU2-G of an OMCI Management Entity (ME) after the ONU is registered in the OLT and the OLT sends a ranging result to the ONU; and
the processing module is further configured to determine the granularity of the start time and the granularity of the grant size according to the value of the rate factor field and the preset default value of the parameter granularity.
